# EUROPEAN PATENT SPECIFICATION

(11) **EP 3 909 466 B1**
(45) Date of publication and mention of the grant of the patent: **20.08.2025**
(21) Application number: 20738390.2
(22) Date of filing: 10.01.2020
(51) Int. Cl.: A46B 15/00, A61C 17/22, A61C 17/32

(54) **TOOTHBRUSH**
ZAHNBÜRSTE
BROSSE À DENTS

(30) Priority: 10.01.2019 JP 2019002982
(43) Date of publication of application: 17.11.2021
(73) Proprietor: Ito Co., Ltd., Tokyo 113-0001 (JP)
(72) Inventor: KURAHASHI, Tsukasa, Tokyo 113-0001 (JP); TAMASHIRO, Daiki, Tokyo 113-0001 (JP)
(74) Representative: Müller Hoffmann & Partner
(86) International application number: PCT/JP2020/000642
(87) International publication number: WO 2020/145382

(56) References cited:
- JP-A- 2003 061 985
- JP-A- 2005 177 253
- JP-A- 2011 004 883
- JP-A- S5 222 492
- JP-U- S58 190 474
- JP-U- S6 093 400
- JP-U- S6 093 400
- US-A1- 2007 157 404
- US-A1- 2016 206 412

## Description

### TECHNICAL FIELD

The present invention relates to an electric toothbrush, in particular an electric toothbrush emitting ultrasonic waves.

### BACKGROUND OF THE INVENTION

Electric toothbrushes have been put into practical use. The electric toothbrushes vibrate during brushing to improve the brushing effect (hereinafter, simply referred to as the brushing effect) including removal and cleaning of plaque. Further, an ultrasonic toothbrush which improves brushing efficiency by using ultrasonic waves to realize good toothbrushing has been proposed, for example, as disclosed in Patent Document 1. As the frequency of the ultrasonic wave used in the ultrasonic toothbrush, for example, as in Patent Document 2 and Patent Document 3, the frequency from 1MHz to 2MHz, for example, 1.6MHz or the like is usually used.

### Prior art literature

### Patent literature

Patent Document 1: Japanese Patent Application Laid-Open No. 2003-61985
Patent Document 2: Japanese Patent Application Laid-Open No. 2005-102837
Patent Document 3: Japanese Patent Application Laid-Open No. 2004-202065
Each of JP 2011 004883 A, US 2007/ 157404 A1, and US 2016/ 206412 A1 shows a device according to the preamble of claim 1.

### SUMMARY OF THE INVENTION

### Problems to be solved by the Invention

Compare to toothbrushes which don't use ultrasonic waves, excellent brushing effect peculiar to ultrasonic waves has been confirmed. On the other hand, the examination regarding the frequency with the highest brushing effect was not sufficiently carried out at present, and it was not clear how much the frequency should be set, even if we want to realize a suitable toothbrush with higher efficiency.

When the frequency of the ultrasonic wave is higher, the thickness of the vibrator is thinner. When the vibrators are mounted into the toothbrush, breakage due to the load applied to the vibrator easily occurs and the defect rate is increased. For example, when the vibrator at a position different from the predetermined position is moved to the correct position, extra force is applied to the vibrator. Breakage of the vibrator is likely to occur because such as cracking or breaking the vibrator due to the excess force. For example, when the vibrator is arranged by a method such as Patent Document 1, this tendency becomes more remarkable because the vibrator is moved in, for example, an adhesive to be filled. Therefore, in order to avoid damage to the vibrator, even if the vibrator is disposed at a position different from the predetermined position, the vibrator may be fixed as it is. Since the position of the vibrator is not a predetermined position, a predetermined ultrasonic wave is not necessarily transmitted to the toothbrush, so that a situation in which a sufficient brushing effect cannot be obtained, causes.

Or, even at a predetermined position, the vibrator is easily fixed in a state where extra force is applied. For example, when the vibrator is fixed in a state of being curved, a situation in which the vibrator cannot output a predetermined ultrasonic wave. Furthermore, since it is easily mounted in a place different from the predetermined position, or when it is fixed in a state where extra force is applied, another problem such as predetermined durability cannot be obtained, occurs because the vibrator is easily cracked.

### Means for Solving the Problem

The above problem is solved by the subject-matter of the independent claim.

In order to solve the above problem, the following means were taken in the present invention. The toothbrush of the present invention comprises: an ultrasonic toothbrush at least comprising: a gripping portion having a signal generator for outputting a drive signal to be supplied to a vibrator that emits ultrasonic waves, a vibrating portion in which the vibrator is disposed, and a brush disposed at a position facing to the vibrating portion, wherein a frequency of the drive signal is 3MHz to 5MHz.

Further, the ultrasonic toothbrush of the present invention is characterized in that the vibrating portion has a space portion in which the vibrator is disposed, and has a flow path through which air in the space portion is discharged, and a cross section of the flow path has one or more corner portions.

The invention is as defined in independent claim 1, with a further embodiment defined in its dependent claim 2.

### EFFECTS OF THE INVENTION

The present invention can provide an ultrasonic toothbrush that enhances cleaning effects such as brushing, e.g., removing plaque, more effectively by specifying the frequency of the ultrasonic waves used in the ultrasonic toothbrush.

Further, even when the thickness of the vibrator to be used become thinner by the higher frequency used, the easily and simple structure avoids damage during mounting the vibrator, and prevents a decrease in the non-defective rate, and can provide a product capable of maintaining the desired performance over a long period of time.

### BRIEF DESCRIPTION OF THE DRAWINGS

[FIG. 1A] It is a left side view of an ultrasonic toothbrush according to an embodiment of the present invention.
[FIG. 1B] It is a front view of an ultrasonic toothbrush according to an embodiment of the present invention.
[FIG. 1C] It is a right side view of an ultrasonic toothbrush according to an embodiment of the present invention.
[FIG. 1D] It is a rear view of an ultrasonic toothbrush according to an embodiment of the present invention.
[FIG. 1E] It is a top view of an ultrasonic toothbrush according to an embodiment of the present invention.
[FIG. 1F] It is a bottom view of an ultrasonic toothbrush according to the present invention.
[FIG. 1G] It is a diagram showing a brush portion of an ultrasonic toothbrush according to an embodiment of the present invention.
[FIG. 1H] It is a diagram showing a state of the ultrasonic toothbrush according to the present invention before the brush portion is mounted.
[FIG. 2] It is a block diagram of a controller of an ultrasonic toothbrush according to the present invention.
[FIG. 3] It is a schematic diagram of an ultrasonic driving signal according to the present invention.
[FIG. 4A] It is a diagram showing a vibrating portion A 19 of the ultrasonic toothbrush (prior to disposition of the vibrator 18).
[FIG. 4B] It is a diagram showing a vibrating portion A 19 (after the vibrator 18 is disposed) of the ultrasonic toothbrush according to the embodiment of the present invention.
[FIG. 5A] It is a diagram showing a cross-section taken along a broken line A in the FIG 4A.
[FIG. 5B] It is a diagram showing a cross section taken along a broken line B in the FIG. 4B.
[FIG. 5C] It is a diagram illustrating a modification of the path arrangement of the vibrating portion A 19.
[FIG. 5D] It is a diagram illustrating a modification of the path arrangement of the vibrating portion A 19.
[FIG. 6A] It is a diagram showing a vibrating portion B 61 (prior to arrangement of the vibrator 18) of the ultrasonic toothbrush according to the present invention.
[FIG. 6B] It is a diagram showing a vibrating portion B 61 (after the arrangement of the vibrator 18) of the ultrasonic toothbrush according to the present invention.
[FIG. 6C] It is a diagram showing a state of the arrangement of the vibrator 18.
[FIG. 6D] It is a diagram showing a cross section of a broken line C of FIG. 6B.
[FIG. 6E] When the configuration of the vibrator shown in FIG. 6C is used in 4A diagram, it is a diagram showing a cross section of a broken line A in FIG. 4A.
[FIG. 7A] It is a diagram showing a vibrating portion C 71 of an ultrasonic toothbrush according to the present invention.
[FIG. 7B] It is a diagram viewed from the direction of the arrow A in the FIG. 7A;
[FIG. 7C] It is a diagram showing a cross section of a broken line D in FIG 7B.
[FIG. 7D] It is a diagram showing a cross section of a broken line D in FIG 7B.
[FIG. 7E] It is a diagram showing a cross section of a broken line D in FIG 7B.
[FIG. 7F] It is a diagram showing a cross section of a broken line D of FIG 7B.
[FIG. 8A] It is a diagram showing a vibrating portion D 83 of a conventional ultrasonic toothbrush.
[FIG. 8B] It is a diagram illustrating a state in which the vibrator 8 is inserted into the vibrating portion D 83 of a conventional ultrasonic toothbrush.
[FIG. 8C] It is a diagram showing a state in which the vibrator 8 is inserted into the vibrating portion D 83 of the conventional ultrasonic toothbrush.
[FIG. 8D] It is a diagram showing a state in which the vibrator 8 is inserted into the vibrating portion D 83 of the conventional ultrasonic toothbrush.
[FIG. 9A] It is a diagram showing a vibrating portion E 94 of an ultrasonic toothbrush according to the present invention.
[FIG. 9B] It is a diagram showing a configuration of a vibrator 18 and the like.

### DETAILED DESCRIPTION OF THE EMBODIMENTS

### (Embodiment 1)

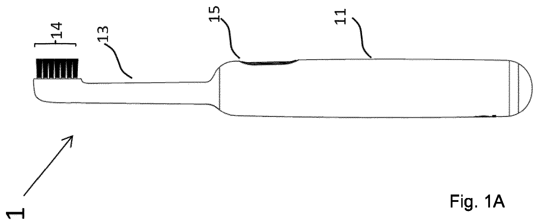

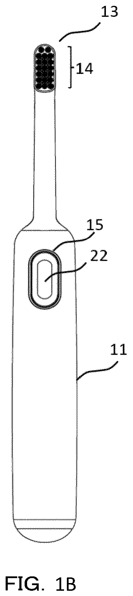

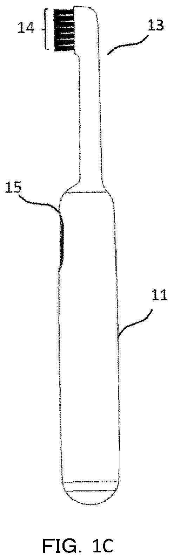

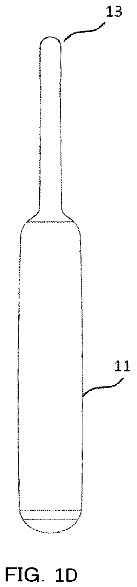

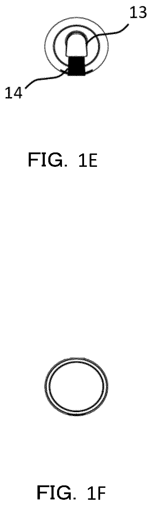

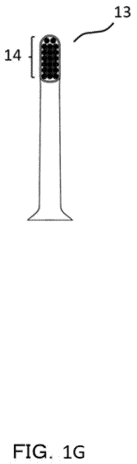

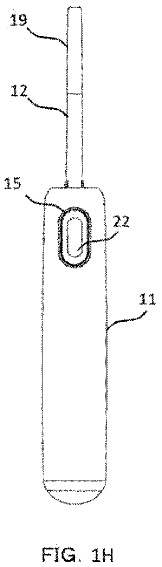

FIG. 1A to FIG. 1H show a main body 1 of the inventive ultrasonic toothbrush, showing a six-sided view of the main body 1. FIG. 1A is a left side view, FIG. 1B is a front view, a 1C is a right side view, FIG. 1D is a rear view, FIG. 1E is a top view, FIG. 1F is a bottom view. FIG. 1G shows a brush portion 13 with a brush 14 at the tip, and FIG. 1H shows the main body 1 prior to mounting the brush portion 13. The main body 1 has a gripping portion 11, an operation portion 15, a protruding portion 12 protruding from the tip of the gripping portion 11, and a vibration portion A 19 at the tip of the protruding portion 12. Each of the protruding portion 12 and the vibration portion A 19 may be configured as an independent component or they may be integrally configured. For example, the vibrating portion having a vibrator 18 for generating ultrasonic waves may be attached to the tip of the protruding portion 12. Alternatively, the protruding portion may be lengthened to a position where the brush 14 is disposed when the brush portion 13 is mounted, and the vibrator 18 may be disposed at a position facing the brush 14 or corresponding to the brush 14 at a tip of the protruding portion, that is, the protruding portion and the vibrating portion may be integrally configured.

Inside the gripping portion 11, a battery 16, a controller 17 for controlling the main body 1 in accordance with the operation of the operation portion 15 are provided. The battery 16 and the controller 17, the controller 17 and the vibrator 18 are respectively connected by a harness A 21, a harness B 20.

A switch 22 a red LED 23 inside the switch 22 are disposed to the operation portion 15. It is possible to perform the control including the emission or stop of the emitted ultrasonic wave by pressing the switch 22 of the operation portion 15 by the user, , the lighting state of LED 23 is changed in response to the operation of the switch 22, for example, the switch 22 is turned on red by LED 23, and it informs the user the driving state and the operating state of the main body 1.

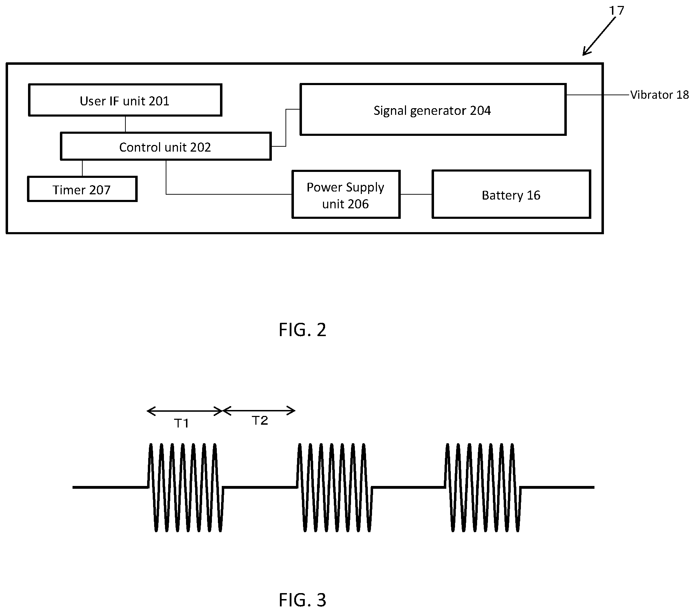

FIG. 2 is a block diagram of the controller 17. The controller 17 is configured to include at least a part or all of a signal generator 204 outputting electric signals as drive signal to the vibrator18 in order to cause the vibrator 18 to vibrate ultrasonically, a timer 207, a user IF unit 201, a power supply unit 206, a control unit 202.

In addition to the CPU and the memory, the control unit 202 includes an interface unit for connection with each unit, and controls the main body 1. Power supply unit 206 controls electric power supplied from the battery 16 to the predetermined constant voltage value, for example, 5V and supplies to each unit via a control unit 202. The user IF unit 201 is connected to the operation portion 15. And when the user operates the operation portion 15, the user IF unit 201 notifies the information to the control unit 202.

Battery 16 may be a dry cell, or may be a secondary battery that can be repeatedly used by charging, such as a lithium-ion battery. Alternatively, instead of these batteries, a power adapter capable of outputting a predetermined voltage, e. g., 5V, from, e. g., a household outlet of 100V or the like may be disposed outside the main body 1 and used.

The timer 207 measures a predetermined time, for example, 3 minutes as the time for brushing, i.e., the time for driving the vibrator 18 in order to output the ultrasonic wave. The time is not limited to 3 minutes, and may be less than 3 minutes or more than 3 minutes, and may be configured to be set by the user as appropriate.

Figure 3 shows the output of the signal generator 204 schematically. In the figure, the horizontal axis represents time, and the vertical axis represents the amplitude of the signal. Signal generator 204 outputs a signal having a frequency of, for example, 3.2MHz or 4.8MHz as a drive signal. As the drive signal, the operation of outputting a sine wave of, for example, 4.8MHz for time Tland stopping for time T2, is repeated in this embodiment When 0.5 see is set as T 1 and 0.5 sec is set as T2, 4. 8MHz is output for 0.5 sec, then stopped for 0.5 sec, and then these are repeated thereafter as the drive signal. Although it is described schematically so as to easily see the sine wave in FIG. 3, in practice output for T1 is a high frequency of 4.8MHz as described above.

In FIG. 3, the drive signal is not always outputted but outputted at a duty 50% as described above, or intermittently. Although there is no significant difference between the case of constant output and the intermittent output as shown in FIG. 3 due to the ultrasonic wave, the apparent battery life is improved since the substantial driving time of the vibrator 18 per unit time is halved. It is possible to lengthen time. In the time, brushing can be done with a single charge. Here, the driving signal is a signal that outputs 4.8MHz intermittently with a duty of 50%, but the duty is not limited to 50%, and may be, for example, 40% or 60%, as long as a desired brushing effect can be obtained.

When the user presses the switch 22, the information is sent to the control unit 202 via the user IF unit 201, the control unit 202 instructs the signal generator 204 to output an electrical signal as shown in FIG. 3. Alternatively, the control unit 202 may be configured to make the signal generator 204 start generating an electrical signal by supplying power to the signal generator 204. Further, the control unit 202 notifies the timer 207 to start measurement of a predetermined time, for example, 3 minutes, and the timer 207 starts measurement of the predetermined time in accordance with the notification.

When a predetermined period of time, for example, three minutes, elapses, the timer 207 notifies the control unit 202 that, and the control unit 202 gives instructions to the signal generator 204 to stop the signal output based on the notification. Or the control unit 202 stops generating the signals by the signal generator 204 by stopping the supply of power to the signal generator 204.

If the user presses the switch 22 again before a predetermined time has elapsed, the information is notified from the user IF unit 201 to the control unit 202, the control unit 202 instructs the signal generator 204 to stop the signal output or stops generating a signal by the signal generator 204 by stopping the supply of power to the signal generator 204. At the same time, the control unit 202 instructs the timer 207 to stop the time measurement, and resets the timer 207.

As the operation of the switch 22 by the user's in the above, pushing the switch 22 is not limited to simply pressing the switch 22, pushing the switch 22 twice in a short time, so-called double click, or pressing the switch 22 for a few seconds, so-called long press may be available so that the double click may be used in order to start the output, and the long press may be used in order to stop the signal. That is, depending on the purpose of operating the switch 22, it is good to change the operation method of the switch 22. Such the configuration like that is desirable because it can avoid malfunction of the apparatus when the switch 22 is erroneously touched. In particular, in the case where the operation portion 15 is disposed in the gripping portion 11 as in the present embodiment, there are many cases where the user touches the operation portion 15 unintentionally. And even if the ultrasonic wave is unintentionally stopped when the switch 22 is pressed by mistake, the user cannot recognize the ultrasonic wave because it is difficult for the user to notice the ultrasonic wave. And even though the ultrasonic wave is stopped, the brushing is continued and a predetermined brushing effect cannot be easily obtained. Therefore, when the user stops the ultrasonic wave, as the switch operation, an operation which is difficult to be obtained without the user's intention, like the double-click or the long-press is desirable.

The signal generator 204 in this embodiment outputs 4.8MHz as a drive signal as described above. The frequency of the ultrasound used was determined as follows. All subjects were trained the correct brushing procedure prior to testing so that individual differences in brushing are minimized by equalizing brushing effect among subjects.

In addition to ultrasonic toothbrushes capable of using 1.6MHz as a frequency, ultrasonic toothbrushes capable of using 3. 2MHz and ultrasonic toothbrushes capable of using 4. 8MHz were prepared. And the group A uses the ultrasonic toothbrush that emits only 1. 6MHz ultrasonic waves to brush, the group B uses the ultrasonic toothbrush that emits only 3. 2MHz ultrasonic waves to brush, and the group C uses the ultrasonic toothbrush that emits only 4.8MHz ultrasonic waves. Each group consists of 17 or 16 persons. However, each subject in each group was not informed of the frequency of the ultrasonic wave emitted by the ultrasonic toothbrush to be used. Further, since the frequency to be used was in the ultrasonic band, any subjects could not hear the sound of each frequency, and it was not possible for each subject to judge which frequency the subject was using. 3 minutes brushing was performed twice a day for 8 consecutive weeks to test which group gave the greatest oral cleaning effect.

As an index for determining the effectiveness of brushing, the plaque index (hereinafter referred to as "PlI") was used. A small PlI indicates less plaque. In addition, the gingivitis index (hereinafter referred to as GI) was also used as another indicator of the effectiveness of brushing. A small GI indicates a low degree of gingivitis.

The PlI of Group A was 0.2-1. 0 before the test, 0.0-0.75 after the test, 0.3-1. 0 before the test in Group B, 0.0-0.5 after the test, 0.3-1. 2 before the test in Group C, 0.0-0.75 after the test, and PlI for 3. 2MHz and 4. 8MHz was decreased more than 1. 6MHz.

The GI of Group A was 0.3-1. 3 before the test, 0.35-1. 5 after the test, 0.6-1.4 before the test in Group B, 0.15-1.2 after the test, 0.45-1.7 before the test in Group C, and 0.2-1.1 after the test. The GI tended to decrease at 3.2MHz and 4.8MHz than 1. 6MHz.

That is, it is understood that the brushing effect is higher at 3.2MHz or 4. 8MHz than at 1. 6MHz. However, the difference between 3. 2MHz or 4. 8MHz and 1.6MHz is respectively greater than difference between 3.2MHz and 4. 8MHz. Regarding frequency, 3. 2MHz or more is more desirable than 1. 6MHz as the frequency used for brushing.

As described above, by setting the frequency of the ultrasonic wave to be used to 3MHz or more, for example, 3.2MHz or 4.8MHz, it is possible to realize an ultrasonic toothbrush that provides a higher brushing effect. Incidentally, the frequency of the ultrasonic wave to be used is not necessarily higher, because, for example, as the thickness of the vibrator to be used when exceeding 5MHz becomes very thin, not only the mass production of the vibrator becomes difficult even in the manufacturing stage of the ultrasonic toothbrush, but also, it is likely to cause cracks and breakage in particular, when mounting the vibrator to the ultrasonic toothbrush, i.e. when mounting it to the vibrating portion A 19 in the present embodiment. Alternatively, when a strong impact such as dropping the main body 1 during use is given, cracks are likely to occur in the vibrator, resulting in desired ultrasonic wave not to be oscillated and problems such as occurring the failure frequently. Thus, the vibrator for oscillating a frequency exceeding 5MHz as the frequency of the ultrasonic wave used is not suitable for mass production of the vibrator itself or the ultrasonic toothbrush and actual use of the toothbrush, eventually, of which about 3MHz to 5MHz is preferred, and 3. 2MHz to 4. 8MHz is the most desirable.

Further in the present invention, with the simple configuration of even the vibrator for outputting the frequency of 3.2MHz and 4.8MHz, the mounting method of the vibrator in the ultrasonic toothbrush and the configuration of the ultrasonic toothbrush are offered which does not reduce the non-defective ratio and the durability.

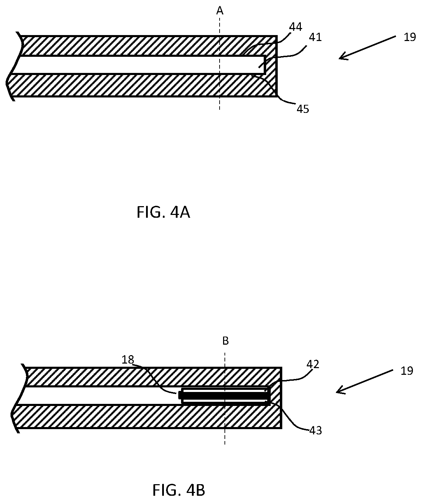

FIG. 4A and FIG. 4B schematically shows a cross section of the vibrating portion A 19 of the main body 1. FIG. 4A shows a state of the vibrating portion A 19 prior to the arrangement of the vibrator 18 in the vibrating portion A 19. A space portion A 41 in which the vibrator 18 is disposed is provided in the vibrating portion A 19. The vibrator 18 is disposed in the space portion A 41 as shown in FIG. 4B and the brush 14 and the vibrator 18 face each other when the brush portion 13 is mounted. That is, the vibrator 18 is disposed at a position facing the brush 14. By the adhesive layer A 42 provided on the surface of the vibrator 18 (hereinafter, referred to as the brush surface) facing the brush 14 and the adhesive layer B 43 provided on the surface of the back surface side of the vibrator 18 with respect to the brush surface (hereinafter, referred to as the brush back surface) the vibrator 18 is fixed to the inside of the space portion A 41 at the tip of the vibrating portion A 19. Although the vibrator 18 is connected to the harness B 20 is not shown because the figure becomes complicated, may be omitted later.

In the present embodiment, the thickness of the vibrator 18 is, for example, about 450 *µ* m. The thickness of the vibrator 18 varies depending on the frequency used. For example, when the frequency is 3.2MHz, it is about 650 *µ* m, and when the frequency is 1.6MHz, it is about 1. 3mm. The thickness of the vibrator 18 easily varies depending on the frequency, and may also vary depending on the material and manufacturing method used. However, the thickness tends to be thinner at higher frequencies, which is most pronounced and tends to be dominant for the thickness of the vibrator.

When the thickness of the vibrator 18 is reduced, the strength of the vibrator 18 is reduced, consequently, the breakage is likely to occur, for example, when mounting the vibrator 18 to the space portion A 41. The reason for this is as follows. When inserting the vibrator 18 into the space portion A 41, an adhesive is applied to the brush surface and the back surface of the brush of the vibrator 18, and before the adhesive is solidified, the vibrator 18 is inserted into the space portion A 41, for example, from the left side of the drawing in the FIG. 4A and pushed into the depth of the space portion A 41, and the adhesive is solidified to fix the vibrator 18 to the space portion A 41. When the vibrator 18 is inserted into the space portion A 41, the vibrator 18 pushes air inside the space portion A 41, so that there is no escape of air in the space portion A 41, and the vibrator 18 is pushed back by the air to receive a large resistance when inserting the vibrator 18. As the vibrator 18 is inserted against this resistance, the work becomes difficult and by applying a further large force to the vibrator 18, or by applying an excessive load such as twisting the vibrator 18 is cracked or broken, as a result, not only the defect rate is increased, but also the predetermined ultrasonic wave cannot be output, which may be a product failure. Further in the fixed vibrator 18 with an excessive load, breakage such as cracks by the vibration given, for example, dropping the main body 1 is likely to occur, therefore such as by shortening the life of the vibrator 18 it will reduce the durability such as to reduce the life of the goods.

In addition, when the vibrator 18 is inserted into the space portion A 41, air in the space portion A 41 may lose its place and push away the adhesive, and may be discharged, for example, by pushing away the adhesive applied to the brush surface, so that the desired adhesive layer A 42 is not formed. If the adhesive is solidified as it is, a void, an air layer or a bubble is formed in the adhesive layer A 42, and even if the vibrator 18 oscillates the predetermined ultrasonic wave, the predetermined ultrasonic wave is not transmitted to the brush portion 13 due to the void, the air layer or the bubble, and the predetermined ultrasonic wave is not emitted from the brush 14, thereby causing a problem in which an ultrasonic wave effect cannot be obtained.

Therefore, in the present embodiment, when the vibrator 18 is inserted into the space portion A 41, the flow path of the air pushed out by the vibrator 18 is secured in advance, whereby the air in the space portion A 41 is discharged by the flow path at the time of mounting the vibrator 18, and the vibrator 18 is smoothly inserted into the space portion A 41 without being pushed back by the air. Therefore, without applying an excessive force to the vibrator 18, breakage of the vibrator 18 at the time of mounting of the vibrator 18 does not occur. The air flow path not only facilitates the insertion of the vibrator 18 to increase the non-defective product rate, but also the vibrator 18 is fixed to the space portion A 41 in a state in which no excessive load is applied to it by the flow path, so that predetermined ultrasonic waves are output satisfactorily and the product life, reliability, and durability are not lowered.

Further, since the air discharged at the time of inserting the vibrator is suitably discharged from the air flow path, the desired positions of the adhesive layer A 42 and the adhesive layer B 43 can be easily formed without any influence on the adhesive layer A 42 and the adhesive layer B 43, and, an ultrasonic toothbrush capable of transmitting a predetermined ultrasonic wave to the brush 14 and sufficiently obtaining the ultrasonic effect can be provided so that the vibrator 18 can be correctly arranged and fixed consequently.

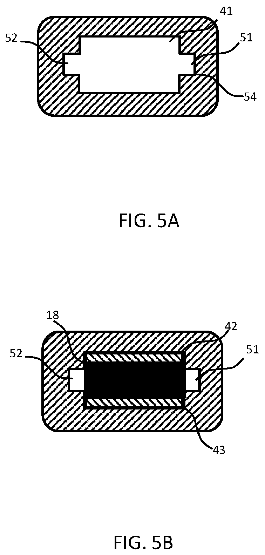

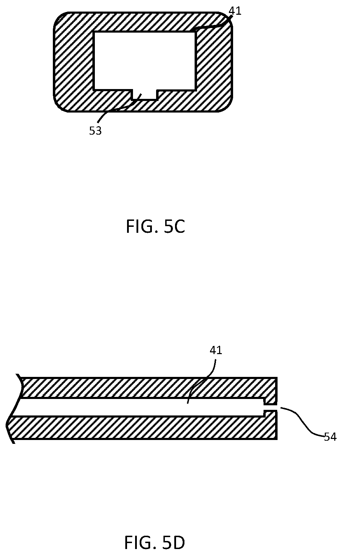

FIG. 5Ato FIG. 5D shows a cross section of the vibrating portion A 19. FIG. 5A schematically shows a cross-sectional view taken along the broken line A of FIG. 4A, and FIG. 5B schematically shows a cross-sectional view taken along the broken line B of FIG. 4B and a cross-sectional view of the state A 19in which the vibrator 18 is disposed in the vibrating portion A 19 respectively. The space portion A 41 is provided with the flow path A 51 and the flow path B 52 serving as a flow path of air, respectively, on both sides of the vibrator 18. Since neither the vibrator 18 nor the adhesive layer is disposed in these flow paths as shown in FIG. 5B, when the vibrator 18 is inserted into the space portion A 41, the air filled in the space portion A 41 is discharged through these flow paths and does not hinder the insertion of the vibrator 18.

When the vibrator 18 is inserted into the space portion A 41, the air filled in the space portion A 41 is discharged through these flow passages, so that the adhesive layer A 42 and the adhesive layer B 43 provided on the brush surface and the back surface of the brush are not pushed away, and the adhesive layer A 42 and the adhesive layer B 43 can be formed satisfactorily.

Due to the flow path A 51 and B 52, the vibrator 18 can be easily inserted into the space portion A 41 without imposing an excessive load on the vibrator 18 at the time of mounting the vibrator 18, and moreover, a desired adhesive layer can be formed, so that not only the decrease in the quality rate can be prevented, but also a predetermined ultrasonic wave can be output and the product defect does not occur. Further fixed vibrator 18 without applying an excessive load, of which the breakage due to the given vibration is less likely to occur, does not reduce the life of the product, the durability and reliability without shortening the life of the vibrator 18.

The above flow passages is suitably disposed on both side surfaces of the vibrator 18 that have the least influence on the oscillation of the vibrator 18 or may be disposed on both sides of the vibrator 18 as shown in the above FIG. 5A and FIG. 5B, or on one side of the side surface of the space portion A 41, that is, on at least one of both side surfaces of the vibrator 18. However, as long as the desired vibration can be supplied to the brush 14, the flow path C 53 may be disposed on the back surface side of the brush of the vibrator 18 as shown in FIG. 5C, or the flow path D 54 may be provided as a through hole at all the way back of the space portion A 41 or at the distal end of the vibrating portion A 19 as shown in FIG. 5D. In this way, regarding the air flow path, at least one flow path may be disposed other than the irradiation surface which is the surface of the vibrator 18 for irradiating the ultrasonic wave to the brush 14, in other words, other than the surface facing the brush of the vibrator, or a position other than the area sandwiched between the vibrator and the brush path.

Alternatively, a plurality of flow passages may be provided at positions other than the region sandwiched between the vibrator and the brush, the flow path A 51 and the flow path C 53 may be arranged, the flow path B 52 and the flow path C 53 may be arranged, or the flow path A 51, the flow path B 52, and the flow path C 53 may be arranged. In the configuration in which a plurality of flow passages are arranged as described above, even when the vibrator 18 is inserted into the space portion A 41 and the flow passage is blocked by the adhesive unintentionally entering the flow passage, for example, even when the flow path A 51 is blocked, air can be discharged by other flow passages, for example, by the flow path B 52 or the flow path C 53, so that the mounting of the vibrator 18 is not hindered by the air in the space portion A 41. That is, the configuration in which a plurality of flow passages are provided is more desirable.

Further, the flow passage is configured such that the cross section as shown in FIG. 5A to FIG. 5C is rectangular or square, or cross section has corner portions. When the vibrator 18 is inserted into the space portion A 41, even when the adhesive enters the flow path unintentionally, it is less likely to completely block the flow path due to the presence of, for example, corner portions in the cross section of the flow path, so that the flow path is easily secured, which is desirable. Therefore, the cross section of the flow passage may have any corner, for example, a cross section having a triangle or a polygon having a pentagon or more may be used.

On the other hand, if the cross section of the flow passage is, for example, a quadrangle, the manufacturing cost may be high, and in this case, the cross section may be configured to be a semicircle or a part of a circle, for example, an arc, but when the adhesive unintentionally enters the flow passage, the flow passage is likely to be blocked, and therefore, it is better to provide a plurality of flow passages in consideration of this point.

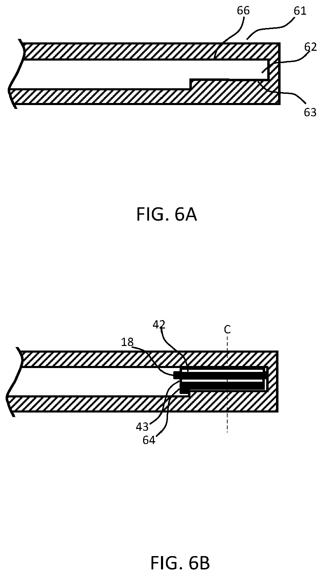

FIG. 6A to FIG. 6E shows the vibrating portion B 61 which is another example as a vibrating portion. Space portion B 62 is provided in the vibration portion B 61, in which by a step provided on the bottom surface of the space portion B 62 as shown in FIG, so that the pedestal portion A 63 for maintaining the desired position of the vibrator is formed. The vibrator 18 is disposed on the pedestal portion A 63. For example, the adhesive layer A 42 and the adhesive layer B 43 may be disposed on the surfaces of the vibrator 18 in the same manner as in the FIG. 4B, but in the vibrating portion B 61, as shown in the FIG. 6B, the adhesive layer B 43 fixes a sponge 64 which is the sponge layer to the vibrator 18, and the vibrator 18 is disposed on the pedestal portion A 63 via the sponge 64.

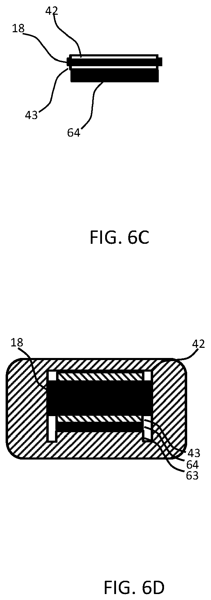

The vibrator 18 is inserted into the space portion B 62 while being fixed to the sponge 64 as shown in the FIG. 6C, and is disposed in the pedestal portion A 63 as shown in the FIG. 6B. The vibrator 18 is fixed by the sponge 64 in a state of being pressed against an upper surface 66 which is a surface close to the brush 14 of the space portion B 62. That is, the sponge 64 functions as a pressing means for pressing the vibrator 18 against the upper surface 66, which is the inner wall of the space portion B 62 in the direction of the brush 14 when mounting the brush portion 13. Instead of the sponge 64, a rubber other than a sponge, a resin having elasticity, or an elastic member such as a leaf spring may be used.

The sponge 64, which is a pressing means, is very effective for forming the good adhesive layer A 42 on the surface of the vibrator as in this embodiment. As described above, the vibrator 18 is inserted into the space portion A 41 before the adhesive applied to the surface solidifies. At this time, the adhesive on the surface of the vibrator 18 comes into contact with the upper surface 66 and the like of the space portion A 41 and is scraped off unevenly to form unevenness in the adhesive layer A 42 on the surface of the vibrator 18, and an air layer may be formed on the surface of the vibrator 18, and as described above, a problem due to the air layer, voids, bubbles, or the like formed on the surface of the vibrator 18 occurs. However, since the vibrator 18 is pressed against the upper surface 66 by the pressing means as in the present embodiment, it is possible to make the adhesive that is temporarily non-uniform at the stage of insertion of the vibrator 18 into a uniform layer without unevenness and to obtain a good adhesive layer A 42.

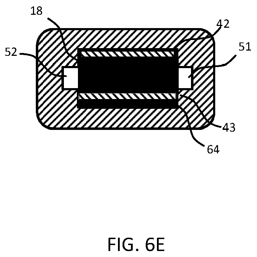

Since the pressing means is very effective for forming the uniform adhesive layer A 42, for example, it can also be used for the vibrating portion A 19 as shown in FIG. 4A, and the configuration may be that the sponge 64 is fixed to the vibrator 18 as shown in FIG. 6C, and it is mounted on the vibrating portion A 19. The cross section of the vibrating portion A 19 in this case is as shown in FIG. 6E.

FIG. 6D is a schematic view of a cross section in the broken line C of the diagram 6B, it shows another example of the flow path. As shown in the figure, by constituting to make the width of the sponge 64, the adhesive layer A 42, the adhesive layer B 43, the pedestal portion A 63 and the like into narrower than the width of the vibrator 18, the flow path is formed in a different form from the flow path described above. That is, by making the width of the adhesive layer or the pressing means, the width in the direction different from the insertion direction to the space portion of the vibrator, for example, the orthogonal direction to the insertion direction into narrower than the width of vibrator, the air flow path is formed by a gap formed between the side surface of the space portion and them. Although a plurality of flow paths may be secured by reducing the width of each adhesive layer and sponge as shown in the FIG. , the flow paths may be formed by reducing the width of only a part of a layer, a pedestal, or the like provided on the brush surface side or the brush back surface side of the vibrator 18 so that the width of other layers is not reduced. For example, by reducing the width of only the adhesive layer A 42, only the adhesive layer B 43 disposed on the back side of the brush, only the sponge 64, or only the pedestal portion A 63, or using only a part of them, the flow path may be formed. For example, the flow path may be formed by reducing only the widths of the adhesive layer B 43 and the sponge 64, or various configurations are possible, such as a configuration in which the widths of the adhesive layer A 42 and the adhesive layer B 43 are narrowed, or a configuration in which the widths of the adhesive layer A 42 and the sponge 64 are reduced. In the FIG. 6E, the width of the adhesive layer A 42 and the sponge 64 is equal to that of the vibrator 18, but the width is not limited to this, and the air flow path may be formed by making the width of at least one of the adhesive layer A 42, the adhesive layer B 43, or the sponge 64 into narrower than the width of the vibrator 18 as in the FIG. 6D.

In the above, the adhesive layer A 42 and the adhesive layer B 43 may be a layer of a curable fluidizing agent, and it is sufficient that the vibrator 18 can be reliably fixed to the space portion A 41, the sponge 64, or the like. In addition to adhesives, thermosetting resins, thermoplastics, or other curable resins can be used, such as epoxy resins, rubbers, or adhesives based thereon. Incidentally, since the adhesive layer B 43 fixes the vibrator 18 and the sponge 64 in the FIG. 6A to FIG. 6E, a double-sided tape or the like may be used instead of the adhesive layer B 43, and the flow path may be formed as described above by narrowing the width of the double-sided tape to be used to be smaller than the width of the vibrator 18.

The flow path is formed by adjusting the width of the layer used for fixing the vibrator 18 in the configuration of the FIG. 6A to FIG. 6E, but is not limited thereto, and may be configured such that the flow path is disposed on the side surface of the vibrator 18 as in the FIG. 5A to the FIG. 5D, and the width of the layer or member used for fixing the vibrator 18 is reduced to form a flow path as in the FIG. 6A to the FIG. 6E, and at the same time, for example, at least one of the flow path A 51, the flow path B 52, or the flow path C 53 may be provided on the side surface of the space portion B 62 that is both sides of the vibrator 18 or the surface of the space portion B 62 that faces the brush back surface of the vibrator 18.

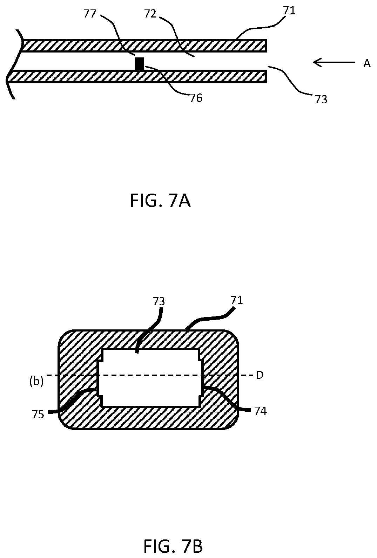

FIG. 7A to FIG. 7F shows another exemplary configuration of a vibrating part. The cross section of the vibrating portion C 71 in which the vibrator 18 is disposed is schematically shown in FIG. 7A to FIG. 7F. FIG. 7A shows a condition prior to placing the vibrator 18 in the vibrating portion C 71. The space portion C 72 is provided inside the vibrating portion C 71, and the gripping portion 11 is on the left side when facing the figure, and the brush 14 is disposed at the right end part, that is, the distal end part to the gripping portion 11 when the brush portion 13 is mounted. The opening A 73 into which the vibrator 18 can be inserted is provided at the distal end of the space portion C 72.

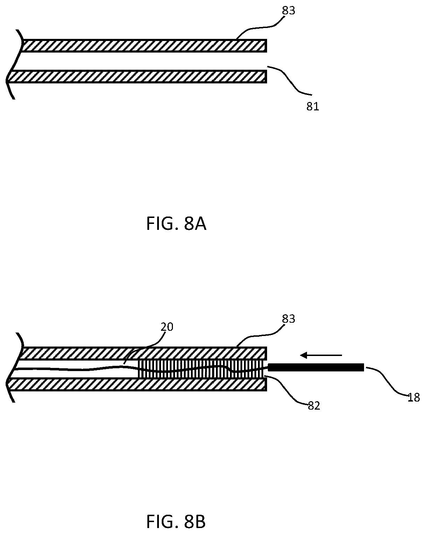

FIG. 8A shows a configuration of the conventional vibrating portion D 83 of a toothbrush having the opening B 81 at its distal end. In order to mount the vibrator 18 in a configuration as in FIG. 8A, a curable resin, e.g., the adhesive 82, is filled from the opening B 81 as in FIG. 8B. Incidentally, the adhesive 82 is filled in a state in which the harness B 20 is inserted into the inside from the opening B 81 in advance. Successively, the vibrator 18 is inserted from the opening B 81, or by pulling the harness B 20 which has been inserted in advance, the vibrator 18 is pulled in from the opening B 81, and when the adhesive 82 is cured in this state, the vibrator 18 is fixed. Although such a configuration can arrange the vibrator with a simple configuration, there are the following problems.

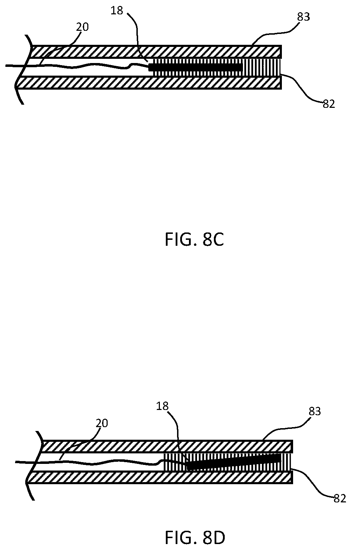

In the configuration as shown in the FIG. 8A, it is difficult to insert the vibrator 18 correctly. For example, it is inserted closer to the brush 14 than a predetermined position, or on the contrary, inserted in a far position, or inserted too deep, or on the contrary, too shallow, or shifted in a orthogonal direction to the insertion direction (the direction of the front side or the back side to the paper plane), or tilted to the brush 14, of which the situation can easily occur. The FIG. 8C and FIG. 8D show an example of these states, that is, the FIG. 8C shows the case where the vibrator 18 is inserted too deep, and the FIG. 8D shows the state where the vibrator 18 is tilted. Even if the insertion itself is performed correctly, eventually it is difficult for vibrator 18 to maintain and arrange in the predetermined place as exemplified in FIG. 8C or 8D or the like because the vibrator 18 inserted until the adhesive 82 is cured is moved. In this case, it causes the problem that the ultrasonic wave is not correctly supplied to the brush 14.

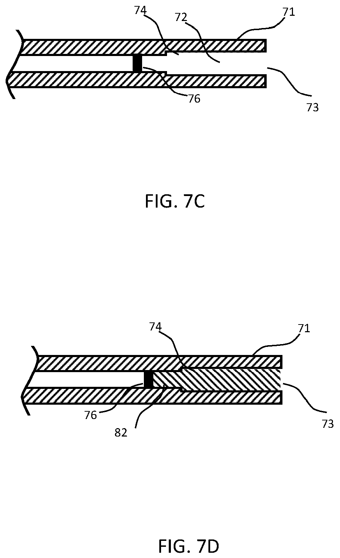

In contrast, in FIG. 7A to FIG. 7F, the following configuration resolves the defect relating to a configuration for inserting the vibrator 18 from the opening provided at the edge d. The diagram viewed from the direction of the arrow A in the FIG. 7A is shown in FIG. 7B, and a cross-sectional view taken along the broken line D of FIG. 7B is shown in FIG. 7C. An insertion path A 74 and an insertion path B 75 in which the vibrator 18 is inserted are provided in the opening A 73 as shown in the figure as maintenance means for maintaining the position of the vibrator. The insertion path A 74 and the insertion path B 75 are provided on the side surface of the space portion C 72 up to a predetermined position of the vibrator 18 along the insertion direction of it, for example, a position where the vibrator 18 is disposed so as to face the brush 14 when the brush portion 13 is mounted. The width from the side surface of the insertion path A 74 to the side surface of the insertion path B 75 is equal to or slightly larger than the width of the vibrator 18, and the vibrator 18 is inserted into this width and maintained at a predetermined position. The way of inserting the vibrator 18 is substantially the same as that shown in the FIG. 8A to the FIG. 8D. First, the harness B 20 is inserted into the space portion C 72 through the opening A 73, and the space portion C 72 is filled with the adhesive 82 as shown in the FIG. 7D, while the vibrator 18 is outside the space portion C 72. In the FIG. 7A to the 7F the protrusion 76 is provided so that the filled adhesive 82 does not flow out, which is possible to minimize the outflow of the adhesive 82. In the upper portion of the protrusion 76 the gap 77 is provided for passing the harness B 20, through which the harness B 20 is connected to the controller 17 inside the gripping portion 11. Since the vibrator 18 is pulled by pushing it along the insertion path A 74 and the insertion path B 75 from the opening A 73 or pulling the harness B 20, it can be reliably moved to a predetermined position along the insertion path A 74 and the insertion path B 75.

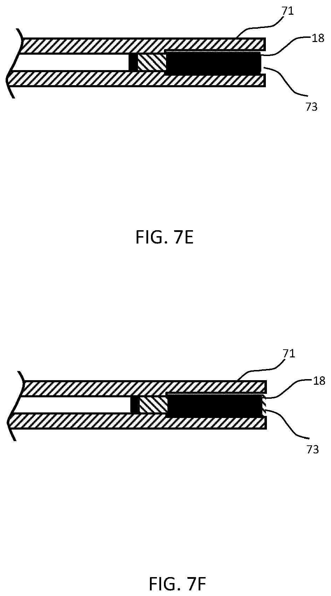

Since a part of the adhesive 82 can flow out through the gap 77 by the insertion of the vibrator 18, the adhesive can be prevented or reduced from overflowing from the opening A 73, and the adhesive 82 can also be avoided or reduced from adhering to the outer periphery of the vibrating portion C 71. After insertion of the vibrator 18, the vibrator 18 is fixed in the predetermined place by solidification of the adhesive 82. Incidentally, since the portion without the adhesive 82 in the opening A 73 by the movement of the vibrator 18 occurs as shown in the FIG. 7E, the opening A 73 may be closed by replenishing the adhesive 82 to this portion as shown in the FIG. 7F. In such a configuration, the vibrator 18 is correctly, reliably, and easily inserted into a predetermined position, and the predetermined position of the vibrator 18 is reliably maintained until the adhesive 82 is solidified, so that a problem does not occur when the vibrator 18 is mounted, and the non-defective product rate can be improved.

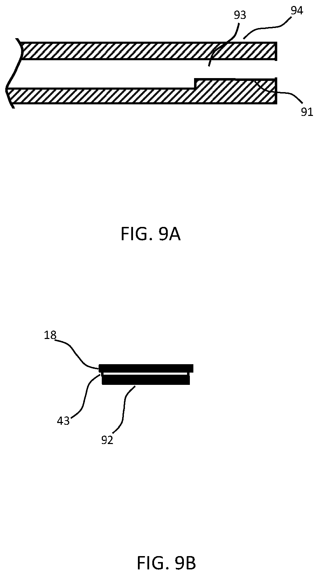

The FIG. 9A and FIG. 9B show other examples of the maintenance means. In the FIG. 9A, the pedestal portion B 91 is formed as a maintenance means at the bottom surface of the space portion D 93 of the vibrating portion E 94, that is, the location where the vibrator 18 is disposed. FIG. 9B shows a configuration in which a maintenance means is provided in the vibrator 18 rather than in the vibrating portion or the space portion, and the pedestal portion C 92 is provided in the vibrator 18. The pedestal portion C 92 is fixed to the vibrator 18 by the adhesive layer B 43, but may be fixed by double-sided tape. The pedestal portion C 92 may be an elastic material such as rubber, sponge, or the like, or may be an inelastic material such as resin. The pedestal portion B 91 is provided with a step in the space portion D 93, and is constituted by the step, on the other hand, the pedestal portion C 92 is a member of a rectangular parallelepiped is used, but the shape of the pedestal portion as a maintenance means is not limited to this and may be a plurality of protrusions, plate-shaped, dome-shaped, or semi cylindrical-shaped as long as the vibrator is properly maintained. Regarding these, first, the adhesive 82 is filled in the same manner as in FIG. 7, and subsequently the vibrator 18 is inserted, and the adhesive 82 is solidified to fix the vibrator 18. Also in the FIG. 9A and the FIG. 9B, it is desirable to provide the protrusion 76 or the gap 77 as shown in FIG. 7A to the FIG. 7F.

In the above-described configuration, even when using a vibrator having a high frequency, the ultrasonic toothbrush can be provided of that the vibrator 18 can be easily installed at the predetermined position without damage, and even if the frequency of the ultrasonic wave is increased it does not increase the defect rate. Furthermore, it is possible to provide a highly reliable ultrasonic toothbrush which is strongly resistant to vibration imparted from the outside.

### DESCRIPTION OF REFERENCES

- 1: Main unit
- 11: Gripping portion
- 12: Protruding portion
- 13: Brush portion
- 14: Brush
- 15: Operation portion
- 16: Battery
- 17: Controller
- 18: Vibrator
- 19: Vibrating portion A
- 20: Harness B
- 21: Harness A
- 22: Switch
- 23: LED
- 41: Space portion A
- 42: Adhesive layer A
- 43: Adhesive layer B
- 51: Flow path A
- 52: Flow path B
- 53: Flow path C
- 54: Flow path D
- 61: Vibrating portion B
- 62: Space portion B
- 63: Pedestal portion A
- 64: Sponge
- 66: Upper surface
- 71: Vibrating portion C
- 72: Space portion C
- 73: Opening A
- 74: Insertion path A
- 75: Insertion path B
- 76: Protrusion
- 77: Gap
- 81: Opening B
- 82: Adhesive
- 83: Vibrating portion D
- 91: Pedestal portion B
- 92: Pedestal portion C
- 93: Space portion D
- 94: Vibrating portion E
- 201: User IF unit
- 202: Control unit
- 204: Signal generator
- 206: Power Supply unit
- 207: Timer

## Claims

1. An ultrasonic toothbrush at least comprising:
a gripping portion (11) having a signal generator (204) for outputting a drive signal to be supplied to a vibrator (18) that emits ultrasonic waves,
a vibrating portion (19, 83, 94) in which the vibrator (18) is disposed, and
a brush (14) disposed at a position facing to the vibrating portion (19, 83, 94);
wherein a frequency of the drive signal is 3MHz to 5MHz, **characterized in that** the vibrating portion has a space portion (41, 62, 72, 93) in which the vibrator (18) is disposed, and has a flow path (51, 52, 53, 54) through which air in the space portion (41, 62, 72, 93) is discharged, and a cross section of the flow path (51, 52, 53, 54) has one or more corner portions.

2. The ultrasonic toothbrush according to claim 1, wherein the flow path (51,52,53,54) is provided on at least one of the side surfaces of the vibrator (18).

## Patentansprüche

1. Ultraschallzahnbürste, mindestens aufweisend:
einen Greifabschnitt (11) mit einem Signalgenerator (204) zum Ausgeben eines Antriebssignals, das einem Vibrator (18) zuzuführen ist, der Ultraschallwellen emittiert,
einen Vibrationsabschnitt (19, 83, 94), in dem der Vibrator (18) angeordnet ist, und
eine Bürste (14), die an einer dem Vibrationsabschnitt (19, 83, 94) zugewandten Position angeordnet ist;
wobei eine Frequenz des Antriebssignals 3 MHz bis 5 MHz beträgt, **dadurch gekennzeichnet, dass** der Vibrationsabschnitt einen Raumabschnitt (41, 62, 72, 93) aufweist, in dem der Vibrator (18) angeordnet ist, und einen Strömungsweg (51, 52, 53, 54) aufweist, durch den Luft in dem Raumabschnitt (41, 62, 72, 93) abgegeben wird, und ein Querschnitt des Strömungswegs (51, 52, 53, 54) einen oder mehrere Eckabschnitte aufweist.

2. Ultraschallzahnbürste nach Anspruch 1, wobei der Strömungsweg (51, 52, 53, 54) an mindestens einer der Seitenflächen des Vibrators (18) vorgesehen ist.

## Revendications

1. Brosse à dents à ultrasons comprenant au moins :
une partie préhension (11) présentant un générateur de signal (204) pour délivrer un signal d'entraînement à fournir à un vibrateur (18) qui émet des ondes ultrasonores,
une partie vibrante (19, 83, 94) dans laquelle le vibrateur (18) est disposé, et
une brosse (14) disposée dans une position en face de la partie vibrante (19, 83, 94) ;
dans laquelle une fréquence du signal d'entraînement est de 3 MHz à 5 MHz, **caractérisée en ce que** la partie vibrante présente une partie espace (41, 62, 72, 93) dans laquelle le vibrateur (18) est disposé, et présente un trajet d'écoulement (51, 52, 53, 54) par lequel l'air dans la partie espace (41, 62, 72, 93) est évacué, et une section transversale du trajet d'écoulement (51, 52, 53, 54) présente une ou plusieurs parties d'angles.

2. Brosse à dents à ultrasons selon la revendication 1, dans laquelle le trajet d'écoulement (51, 52, 53, 54) est fourni sur au moins une des surfaces latérales du vibrateur (18).
